# EUROPEAN PATENT SPECIFICATION

(11) **EP 2 824 342 B1**
(45) Date of publication and mention of the grant of the patent: **26.12.2018**
(21) Application number: 13305977.4
(22) Date of filing: 09.07.2013
(51) Int. Cl.: F16C 33/58, F16C 35/073, F16C 41/04, F16C 43/04

(54) **Method for assembling a bearing unit**
Verfahren zur Montage einer Lagereinheit
Procédé pour l'assemblage d'une unité de palier

(43) Date of publication of application: 14.01.2015
(73) Proprietor: Aktiebolaget SKF, 415 50 Göteborg (SE)
(72) Inventor: Houdayer, Christophe, 37360 Semblancay (FR); Soudee, Jean-Marc, 37000 Tours (FR)
(74) Representative: Kohl, Thomas

(56) References cited:
- WO-A1-2011/076622
- WO-A2-2008/081122
- US-A1- 2008 089 628
- US-A1- 2011 133 379
- US-A1- 2012 213 464
- US-A1- 2013 121 754

## Description

The invention relates to a bearing unit, a method and a machine tool for assembling a bearing unit according to the independent claims.

The documents WO 2008/081122 A3, WO 2011/076622 A1 and US 2008/0048370 A1 disclose bearing units including an outer or upper member with an outer ring, an inner or lower member with an inner ring and rolling elements arranged between the outer ring and the inner ring respectively.

The inner or lower member comprises a radially projecting rim and the outer or upper member comprises at least one engaging member engaging around the rim of the inner member so as to axially secure the outer member to the inner member.

The engaging member and the rim cooperate in such a way that the upper or outer member is secured to the inner member by means of a snap-fitting connection and the engaging members are formed as elastic clips with an engaging portion protruding radially inward. Either the engaging portion or the rim or both of these members is provided with a chamfer deflecting the elastic clips radially outward when axially pushing the upper member onto the lower member upon assembly of the bearing unit.

The invention addresses the problem that the clips forming the engaging member risk to break off during assembly or transport of the bearing unit. This may result in an undesired disassembly of the unit and/or in damages caused by the clip parts interfering with other mechanical parts of the bearing unit or of the system in which the latter is to be used.

By fixing the outer member to the inner member and/or vice versa using plastic deformations rather than elastic deformations as used in the snap-fitting connections according to the prior art, any damages such as cracks or breaking-off of the clips as occurring during the snap-fitting process may be safely avoided. Further, the connection may be tighter and other diameters of the engaging portions may be used, enabling e. g. an enhanced screening, reduction of weight and/or expenses for the material to be used.

The above-mentioned increased freedom of design is further increased by the fact that the engaging portion and/or the outer edge of ring may lack a chamfered portion enabling a snap-fitting of the engaging portion over the rim.

In one embodiment of the invention, a plurality of latch-like engaging portions is provided on a circumference of the outer member. This enables a light-weight fixing structure which is robust and highly secure.

It is further proposed that the outer member comprises an outer housing of plastic material, wherein the engaging portion is formed integrally on the outer housing. In comparison with separate engaging portions, this reduces the costs and the complexity of the manufacturing process greatly. Since the flexibility required for snap-fitting connections is not required for the engaging portion according to the invention, the spectrum of plastic materials which may be employed can be increased and/or shifted.

Further, it is proposed that the inner member comprises an inner housing of plastic material, the rim being formed on the inner housing. Accordingly, a further cost reduction may be achieved.

The invention further proposes a method for assembling a bearing unit according to one of the preceding claims, wherein the engaging portion is bent radially inward so as to engage around the rim of the inner member after placing or while placing the outer member onto the inner member. In particular, it is proposed that the step of bending the engaging portion comprises heating the engaging portion and plastically deforming the portion. Damages of the engaging portion such as cracks in the clips caused by deformations during the snap-fitting action may be safely avoided.

According to one embodiment of the invention, it is proposed that a hot tool is brought in contact with the engaging portion so as to both heat and deform the engaging portion. Accordingly, the connection between the outer member and the inner member may be realized in a simple one-step process.

In particular, it is proposed that the tool comprises a hot metal ring with the contact surface having a profile which is bent and inclined radially inward, wherein the engaging portion is axially pressed onto the contact surface.

In the alternative or in addition to the use of the heated tool, the material of the engaging portion may be preheated prior to bending, in order to be softened and to facilitate the bending process. In particular, the material of the engaging portion may be preheated using a laser.

A further aspect of the invention relates to a machine tool for assembling a bearing unit using the method as described above. The machine tool comprises a first portion for holding the inner member, a second portion for pushing at least a part of the outer member into the inner member and a deformation tool for bending the engaging portion radially inward so as to engage around the rim of the inner member.

In a preferred embodiment of the invention, the deformation tool is formed so as to heat the engaging portion with a contact surface having a profile which is bent radially or conically inward.

The following description of preferred embodiments of the invention as well as the appended claims and figures show multiple characteristic features of the invention in specific combinations. The skilled person will easily be able to consider further combinations or sub-combinations of these features in order to adapt the invention as defined in the claims to his specific needs.
Fig. 1 is a section of a bearing unit according to the invention.
Fig. 2 is a bearing unit according to the invention in an intermediate configuration prior to bending an engaging portion of an outer member radially inward.
Fig. 3A and 3B illustrate a method and a machine tool for assembling the bearing unit including a heatable ring.

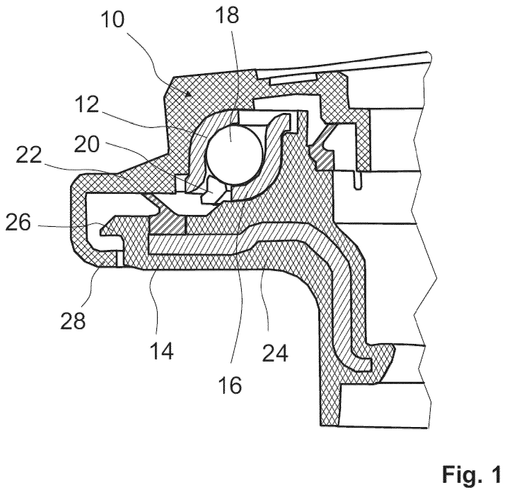

Fig. 1 illustrates a bearing unit according to the invention. The bearing unit includes an outer member 10 with an outer ring 12 and an inner member 14 with an inner ring 16 and rolling elements 18 formed as balls and contacting raceways of the outer ring 12 and the inner ring 16, respectively. The rolling elements 18 are guided in a cage 20.

Besides of the outer ring 12 and the inner ring 16, the outer member 10 includes an upper housing 22 made of a thermoplastic material and the inner member includes a lower housing 24 supporting the inner ring 16. The lower housing 24 of the inner member 14 comprises a radially protruding rim 26, and the outer member 10 comprises an engaging portion 28 engaging around the rim 26 of the inner member 14 so as to axially secure the outer ring 12, which is supported by the upper housing 22 of the outer member 10, to the inner ring 16 and to the lower housing 24.

The engaging portion 28 in its final configuration is basically formed as a collar protruding radially inward such that its inner diameter is smaller than the outer diameter of the rim 26 of the lower housing 24. The engaging member 28 creates a form-fitting connection between the lower housing 24 and the upper housing 22 and the lower housing 24 and the upper housing 22 cannot be disassembled by elastically deforming the engaging member 28 radially outward as in the prior art. The connection between the upper housing 22 and the lower housing 24 is therefore highly secure.

The engaging portion 28 is bent around the rim 26 by plastic deformation after placing the outer member 10 onto the inner member 24. Tapered portions enabling a snap-fitting of the engaging portion 28 over the rim 26 are not necessary.

The engaging portion 28 may be formed as a closed collar over the entire circumference of the upper housing 22 or, alternatively, a plurality of latch-like engaging portions 28 may be provided on a circumference of the outer member 10.

The outer member 10 is made of a plastic material, in particular a thermoplastic material, and the engaging portion 28 is formed as one piece with the outer or upper housing 22.

In the preferred embodiment, wherein the engaging portion 28 is formed as a closed collar over the entire circumference of the upper housing 22, the gap between the engaging portion 28 and the rim 26 forms an effective labyrinth seal protecting the bearing from detrimental influences from the outside.

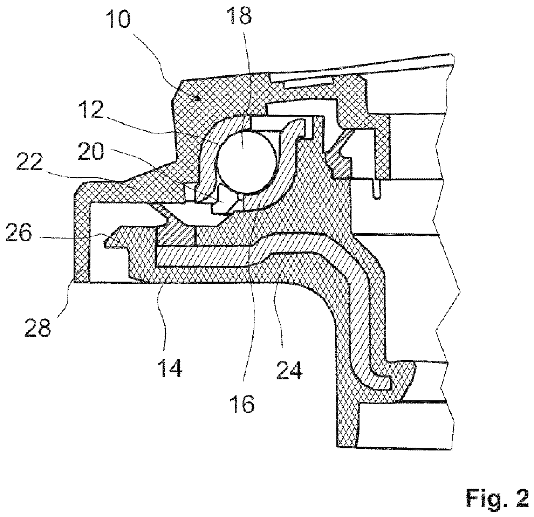

The configuration of the bearing unit prior to plastically deforming the engaging portion 28 is illustrated in Fig. 2.

In this configuration, the engaging portion 28 is basically formed as a cylindrical bushing with an inner diameter slightly wider than the outer diameter than that of the rim 26. The upper housing 22 can thus simply be fitted over the lower housing 24 and over the rim 26 without there being any necessity to establish a contact between the support and/or to deform the outer housing 22 or the engaging portion 28.

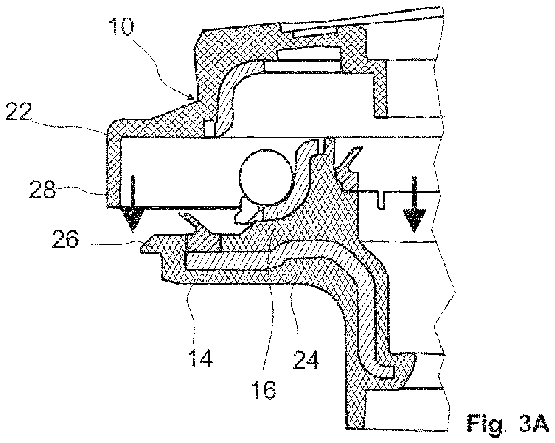

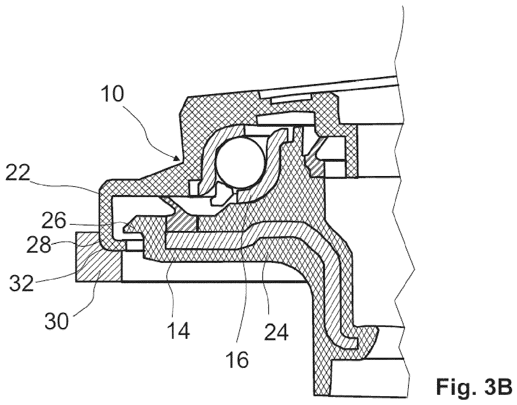

Figs. 3A and 3B illustrate a method for assembling the bearing unit as described above. The upper housing 22 is fitted over the lower housing 24 (Fig. 3A) and during the fitting process or after the fitting process, a hot tool 30 is brought into contact with the engaging portion 28 so as to both heat and deform the engaging portion 28. The engaging portion 28 is pressed onto a contact surface 32 of the tool 30, which is conically inclined radially inward and/or bent in a curve such that the engaging portion is heated by the tool and plastically deformed radially inward such that its radially inner end is bent to a radial position within the radially outer edge of the rim 26.

Optionally, the engaging portion 28 may be preheated in the configuration of Fig. 3A or before fitting the upper housing 22 over the lower housing 24. The preheating may be achieved using a laser or hot air.

The contact surface 32 of the tool 30 may be coated with an anti-sticking coating or a material onto which the thermoplastic material of the engaging portion 28 does not stick. The sticking may further be avoided by wetting the contact surface 32 with an appropriate anti-sticking agent prior to contacting the contact surface 32 with the engaging portion 28.

In alternative embodiments of the method according to the invention, the bending process may be a multi-step process where tools with contact surfaces having different curvatures are sequentially applied with stepwise decreasing curvature radii. The contact surface 32 of the tool is preferably heated to a temperature between 50 and 400 °C being applied to the plastic material. The temperature, the positioning and the application time of the tool may be optimized for avoiding undesired chemical reactions, burning or liquidification of the plastic material.

In the illustrated embodiment, the invention is employed for fixing an upper housing to a lower housing of a MacPherson strut bearing unit (MSBU) but the invention is not limited to MSBUs but maybe employed for other types of axial bearings including bearings with other types of rolling elements.

## Claims

1. Method for assembling a bearing unit comprising:
- an inner member (14) with an inner ring (16) and a radially projecting rim (26),
- an outer member (10) with an outer ring (12) and an engaging portion (28) dedicated to engage the rim (26) so as to axially secure the outer ring (12) to the inner ring (16), and
- rolling elements (18) arranged between the outer ring (12) and the inner ring (16),
the said method comprising the following successive steps:
(a) initially, the said portion (28) is provided on the outer member (10) so as to form a cylindrical bushing with an inner diameter slightly wider than the outer diameter of the rim (26);
(b) the outer member (10) is fitted over the inner member (14) and the rim (26); and
(c) the engaging portion (28) is heated and plastically deformed so as to be bent radially inward to engage around the rim (26) of the inner member (14) after placing or while placing the outer member (10) onto the inner member (14).

2. Method according to claim 1, wherein a hot tool (30) is brought in contact with the engaging portion (28) so as to both heat and deform the engaging portion (28).

3. Method according to claim 2, wherein the tool (30) comprises a hot metal ring with a contact surface (32) having a profile which is bent and/or inclined radially inward, wherein the engaging portion (28) is axially pressed onto the contact surface (32).

4. Method according to one of claims 1 to 3, wherein the material of the engaging portion (28) is preheated prior to bending.

5. Method according to claim 4, wherein the material of the engaging portion (28) is preheated using a laser.

## Patentansprüche

1. Verfahren zur Montage einer Lagereinheit, umfassend:
- ein Innenelement (14) mit einem Innenring (16) und einem radial vorstehenden Rand (26),
- ein Außenelement (10) mit einem Außenring (12) und einem Eingriffsabschnitt (28), der dazu bestimmt ist, mit dem Rand (26) einzugreifen, um den Außenring (12) axial an dem Innenring (16) zu sichern, und
- Wälzkörper (18), die zwischen dem Außenring (12) und dem Innenring (16) angeordnet sind,
wobei das Verfahren die nachstehenden aufeinander folgenden Schritte umfasst:
(a) zunächst Bereitstellen des Abschnitts (28) an dem Außenelement (10), um eine zylindrische Buchse mit einem Innendurchmesser zu bilden, der geringfügig größer als der Außendurchmesser des Rands (26) ist,
(b) Anbringen des Außenelements (10) über dem Innenelement (14) und dem Rand (26) und
(c) Erwärmen und plastisches Verformen des Eingriffsabschnitts (28), um diesen radial nach innen zum Eingriff um den Rand (26) des Innenelements (14) zu biegen, nachdem das Außenelement (10) auf das Innenelement (14) gesetzt worden ist oder während das Außenelement (10) auf das Innenelement (14) gesetzt wird.

2. Verfahren nach Anspruch 1, wobei ein Heißwerkzeug (30) in Kontakt mit dem Eingriffsabschnitt (28) gebracht wird, um den Eingriffsabschnitt (28) sowohl zu erwärmen als auch zu verformen.

3. Verfahren nach Anspruch 2, wobei das Werkzeug (30) einen Heißmetallring mit einer Kontaktfläche (32) umfasst, die ein Profil aufweist, das radial nach innen gebogen und/oder geneigt ist, wobei der Eingriffsabschnitt (28) axial auf die Kontaktfläche (32) gepresst wird.

4. Verfahren nach einem der Ansprüche 1 bis 3, wobei das Material des Eingriffsabschnitts (28) vor dem Biegen vorerwärmt wird.

5. Verfahren nach Anspruch 4, wobei das Material des Eingriffsabschnitts (28) mit Hilfe eines Lasers vorerwärmt wird.

## Revendications

1. Procédé pour l'assemblage d'une unité de palier comprenant :
- un élément intérieur (14) avec une bague intérieure (16) et un bord en saillie radiale (26),
- un élément extérieur (10) avec une bague extérieure (12) et une partie de mise en prise (28) destinée à venir en prise avec le bord (26) de sorte à fixer axialement la bague extérieure (12) à la bague intérieure (16), et
- des éléments roulants (18) disposés entre la bague extérieure (12) et la bague intérieure (16),
ledit procédé comprenant les étapes successives consistant à :
(a) disposer initialement, ladite partie (28) sur l'élément extérieur (10) de sorte à former une douille cylindrique avec un diamètre intérieur légèrement plus large que le diamètre extérieur du bord (26) ;
(b) placer l'élément extérieur (10) sur l'élément intérieur (14) et le bord (26) ; et
(c) chauffer et déformer plastiquement la partie de mise en prise (28) de sorte qu'elle soit pliée radialement vers l'intérieur pour venir en prise autour du bord (26) de l'élément intérieur (14) après avoir placé ou tout en plaçant l'élément extérieur (10) sur l'élément intérieur (14).

2. Procédé selon la revendication 1, un outil chaud (30) étant amené en contact avec la partie de mise en prise (28) de sorte à chauffer et déformer la partie de mise en prise (28).

3. Procédé selon la revendication 2, l'outil (30) comprenant une bague métallique chaude avec une surface de contact (32) ayant un profil qui est plié et/ou incliné radialement vers l'intérieur, la partie de mise en prise (28) étant pressée axialement sur la surface de contact (32) .

4. Procédé selon l'une des revendications 1 à 3, le matériau de la partie de mise en prise (28) étant préchauffé avant le pliage.

5. Procédé selon la revendication 4, le matériau de la partie de mise en prise (28) étant préchauffé à l'aide d'un laser.
